# EUROPÄISCHE PATENTSCHRIFT

(11) **EP 0 983 175 B1**
(45) Veröffentlichungstag und Bekanntmachung des Hinweises auf die Patenterteilung: **10.10.2001**
(21) Anmeldenummer: 98929349.3
(22) Anmeldetag: 20.05.1998
(51) Int. Cl.: B60T 8/34, F16K 15/02

(54) **RÜCKSCHLAGVENTIL SOWIE HYDRAULISCHE SCHLUPFGEREGELTE FAHRZEUGBREMSANLAGE MIT EINEM SOLCHEN VENTIL**
NON-RETURN VALVE AND HYDRAULIC ANTI-SLIP VEHICLE BRAKING SYSTEM WITH A NON-RETURN VALVE
SOUPAPE DE RETENUE ET SYSTEME DE FREINAGE HYDRAULIQUE ANTIBLOCAGE POUR VEHICULE EQUIPE D'UNE TELLE SOUPAPE

(30) Priorität: 24.05.1997 DE 19721837
(43) Veröffentlichungstag der Anmeldung: 08.03.2000
(73) Patentinhaber: Continental Teves AG & Co. oHG, 60488 Frankfurt am Main (DE)
(72) Erfinder: BURGDORF, Jochen, D-63075 Offenbach (DE); VOLZ, Peter, D-64291 Darmstadt (DE)
(86) Internationale Anmeldenummer: EP9802967
(87) Internationale Veröffentlichungsnummer: WO9852802

(56) Entgegenhaltungen:
- DE-A- 4 337 133
- DE-A- 19 632 343
- FR-A- 1 047 323
- US-A- 2 059 760
- US-A- 5 605 384

## Beschreibung

Die Erfindung bezieht sich auf ein Rückschlagventil nach dem Oberbegriff des Anspruchs 1 sowie auf eine schlupfgeregelte hydraulische Bremsanlage nach dem Oberbegriff des Anspruchs 9 mit einem solchen Rückschlagventil.

Eine hydraulische Bremsanlage mit einem Primärkreis und einem Sekundärkreis ist in der DE 43 37 133 A1 beschrieben. Unter einem Primärkreis sollen die Verbindungsleitungen und Kanäle verstanden werden, die den Hauptbremszylinder der Bremsanlage mit den Radbremsen verbinden und die bei einer normalen Bremsbetätigung von der Bremsflüssigkeit in Richtung zu den Radbremsen durchströmt werden. Unter dem Sekundärkreis sollen diejenigen Verbindungsleitungen und Kanäle verstanden werden, die im Fall einer Radschlupfregelung von Druckmitteln durchströmt werden.

Der Sekundärkreis ist eingangsseitig über ein Auslaßventil und ausgangsseitig über eine sogenannte Rückförderpumpe mit dem Primärkreis verbunden. Die Bremsanlage wird mit einer üblichen Bremsflüssigkeit als Druckmittel gefüllt. Die Befüllung erfolgt gegen Ende der Fahrzeugmontage am Montageband, also erst nachdem die Bremsanlage trocken ins Fahrzeug eingebaut worden ist. Dazu hat sich die folgende schnell und unproblematisch durchzuführende Vorgehensweise bewährt: Zunächst wird die gesamte Anlage evakuiert und dann im evakuierten Zustand mit einem Bremsflüssigkeitstank verbunden, wodurch die Bremsflüssigkeit in die Bremsanlage einströmt und zunächst den Primärkreis füllt. Damit auch der Sekundärkreis mit Druckmittel gefüllt wird, wird bei dieser Prozedur, d.h. sowohl beim Evakuieren als auch beim Befüllen, das elektromagnetisch betätigbare Auslaßventil geöffnet. Dies ist insofern nachteilig, da an der Füllstation eine Möglichkeit vorgesehen werden muß, das normalerweise geschlossene Auslaßventil in die Offenstellung zu schalten.

In der DE 43 37 133 A1 wird daher vorgeschlagen, zwischen dem Sekundärkreis und dem Primärkreis ein Rückschlagventil zu schalten, das zum Primärkreis hin öffnet. Beim Evakuieren der Anlage öffnet dieses Ventil, so daß beide Kreise evakuiert werden. Wenn, wie im ersten Ausführungsbeispiel der Offenlegungschrift vorgestellt, der Ventilschließkörper nicht von einer Feder in Schließrichtung belastet ist, bleibt das Ventil am Ende des Evakuierungsvorganges offen, so daß beim Füllvorgang sowohl der Primärkreis als auch der Sekundärkreis mit Druckmittel gefüllt werden. In einem zweiten Ausführungsbeispiel wird als vorteilhaft herausgestellt, daß das Rückschlagventil nach dem Evakuierungsvorgang schließt. Dies sollte nach dem Vorschlag dadurch realisiert werden, daß der Ventilschließkörper über dem Ventilsitz angeordnet ist und von der Schwerkraft auf den Ventilssitz gedrückt wird. Bei einer auf einem Rollenprüfstand induzierten Radschlupfregelung, bei der das Auslaßventil geöffnet und die Rückförderpumpe eingeschaltet wird, strömt Bremsflüssigkeit in den Sekundärkreis.

Der Vorschlag nach der DE 43 37 133 A1 gewährleistet eine rasche und einfache Befüllbarkeit der Bremsanlage mit Bremsflüssigkeit bei der Fahrzeugmontage. Der zusätzliche Einbau eines Rückschlagventils zwischen dem Sekundärkreis und dem Primärkreis hat aber auch einige Nachteile. Es muß nämlich dafür gesorgt werden, daß das Ventil absolut dicht ist, da sonst im Sekundärkreis bei einer Bremsbetätigung der Hauptzylinderdruck aufgebaut wird mit der Folge, daß während einer Radschlupfregelung kein Druckabbau in den Radbremsen möglich ist.

Eine Dichtungspaarung Metall/Metall für Ventilsitz/Ventilschließkörper ist dafür ungeeignet, da sich Verunreinigungen oder Späne zwischen Ventilsitz und Ventilschließkörper setzen können, die verhindern, daß das Ventil vollständig schließt.

In der gattungsbildenden DE 19632343 A1 wurde daher schon vorgeschlagen, zumindest die Dichtlippe des Ventilschließkörpers aus relativ weichem Kunststoff zu fertigen, welche die in der Bremsflüssigkeit vorhandenen Verunreinigungen aufnimmt und einlagert, so daß gewährleistet ist, daß das Rückschlagventil sicher schließt. Außerdem wurde vorgeschlagen, den Ventilschließkörper mit einer schwachen Feder zu belasten, so daß ähnlich wie im zweiten Vorschlag der DE 43 37 133 A1 beim Evakuierungsvorgang beide Kreise evakuiert werden und beim Füllvorgang zunächst nur der Primärkreis mit Bremsflüssigkeit gefüllt wird, während der Sekundärkreis bei einer induzierten Radschlupfregelung durch Öffnen des Auslaßventils gefüllt wird. Aber auch diese Lösung ist nicht frei von Problemen, insbesondere in den Fällen, in denen der Sekundärkreis von einem Kanal in einem sogenannten Ventilblock aus Stahl oder Aluminium gebildet wird: Bei einer Bremsbetätigung, bei der im Primärkreis ein Druck aufgebaut wird, lastet dieser auf dem Ventilschließkörper, der unter Zusammendrückung seiner elastisch nachgiebigen Dichtlippe in Richtung auf den Sekundärkreis verschoben wird. Dabei wird das Volumen, das dem Druckmittel im Sekundärkreis zur Verfügung gestellt wird, verkleinert, wodurch ein entsprechender Teil der Bremsflüssigkeit an der Dichtlippe vorbei in den Primärkreis verdrängt wird. Nach Lösen der Bremsen, also nachdem sich der Druck im Primärkreis wieder abgebaut hat, wird der Ventilschließkörper unter der elastischen Wirkung seiner Dichtlippe wieder zurückgeschoben, wodurch der dem Druckmittel zur Verfügung stehende Raum im Sekundärkreis wieder vergrößert wird mit der Folge, daß sich dort ein nicht gewünschter Unterdruck ausbildet. Eine Möglichkeit dem Problem zu begegnen, bestünde darin, die Vorspannung der Ventilfeder zu erhöhen, was aber wiederum zur Folge hätte, daß der Sekundärkreis nicht vollständig evakuiert werden kann, was wiederum eine besondere Füllungsprozedur notwendig machen würde.

Die Erfindung beruht somit auf der Aufgabe, das Rückschlagventil so zu gestalten, daß es, in der beschriebenen Kraftfahrzeugbremsanlage mit Radschlupfregelung eingesetzt, geeignet ist, die oben angegebenen Probleme zu lösen.

Diese Aufgabe wird erfindungsgemäß durch die den Patentanspruch 1 kennzeichnenden Merkmale gelöst.

Unter Normalbetrieb einer Bremsanlage sollen diejenigen Zustände verstanden werden, bei denen im Primärkreis ein Druck aufgebaut wird. Die Sperreinrichtung soll verhindern, daß über das Rückschlagventil ein Druckmittelaustausch erfolgt.

Die Sperreinrichtung kann so ausgelegt sein, daß sie bei einer erstmaligen Druckbelastung des Ventilschließkörpers, z.B. bei einer Bremsung, wirksam wird.

Sie kann z.B. aus einer einseitig wirkenden Sperreinrichtung bestehen, die greift, sobald der Ventilschließkörper in Richtung auf den Sekundärkreis verschoben worden ist.

Die Sperreinrichtung kann aus einem federnd nachgiebig angeordneten Riegel am Ventilschließkörper bestehen, der an einer (Haupt-)Raste am Ventilsitzkörper eingreift.

Der Riegel kann auch dazu genutzt werden, um den Ventilschließkörper an einer Vorraste am Ventilsitzkörper zu halten, damit die Einheit aus Ventilfeder, Ventilschließkörper und einem Ventilsitzkörper in ein entsprechendes Gehäuse eingebaut werden kann.

Vorzugsweise werden die Rasten an einem den Ventildurchgang aufweisenden Ventilsitzkörper auf der dem Ventilschließkörper abgewandten Seite ausgebildet, wobei der Riegel an einem elastisch nachgiebigen Halter, der durch den Ventildurchgang durchgeführt ist, angeordnet ist.

Im folgenden wird die Erfindung anhand eines Ausführungsbeispiels näher erläutert. Es zeigen:
- Figur 1:: einen Hydraulikschaltplan für eine Kraftfahrzeugbremsanlage mit Radschlupfregelung mit einer prinzipiellen Darstellung des erfindungsgemäßen Rückschlagventils,
- Figur 2:: eine Ausführungsform des Rückschlagventils in der Funktionsstellung und
- Figur 3:: dasselbe Ventil in der Sperrstellung.

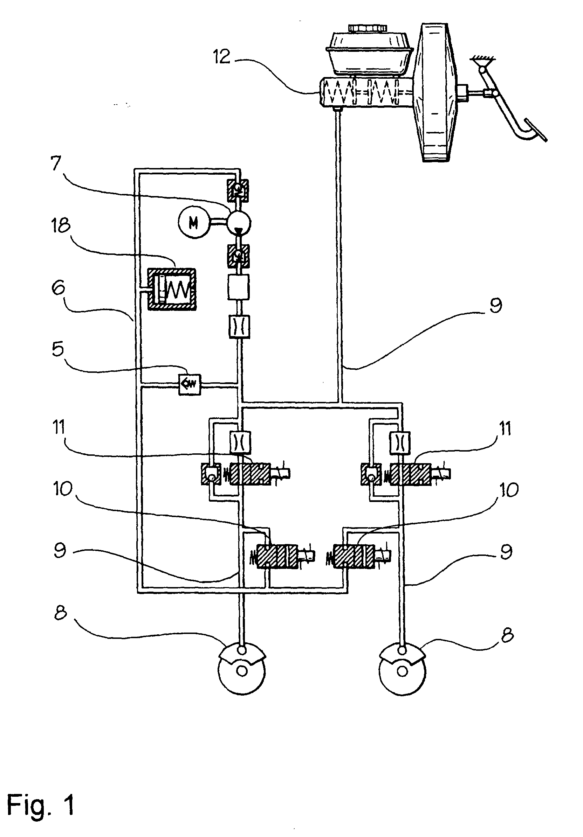

Die Figur 1 zeigt den Hydraulikschaltplan für eine hydraulische Kraftfahrzeugbremsanlage mit Radschlupfregelung, die nach dem Rückförderprinzip arbeitet.

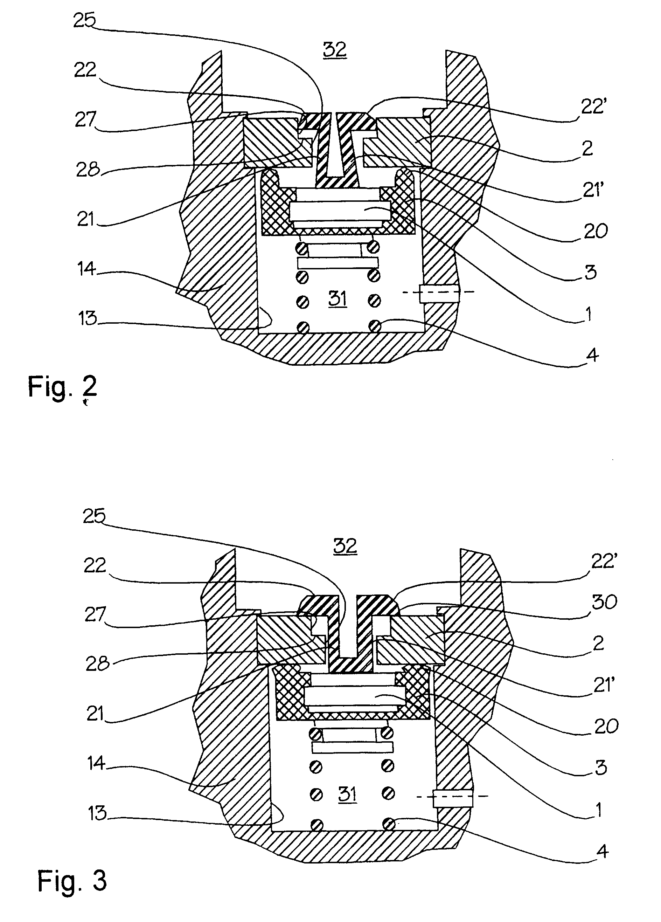

Ein an einem Bremsdruckgeber 12 angeschlossener Bremsdruckpfad 9 verzweigt sich auf zwei Radbremsen 8, wobei in die Abzweigungen des Bremsdruckpfades 9 in der Grundstellung elektromagnetisch nicht erregte, offene Einlaßventile 11 eingesetzt sind. Dieser hydraulische Abschnitt der Bremsanlage soll im nachfolgenden mit dem Begriff Primärkreis umschrieben werden. Zwischen den in der Grundstellung geöffneten Einlaßventilen 11 und den Radbremsen 8 sind an den Bremsdruckpfaden 9 in der Grundstellung geschlossene Auslaßventile 10 angeordnet, die mit einem Saugpfad 6 einer Pumpe 7 in Verbindung stehen. Am Saugpfad 6 schließt sich eine mit dem Bremsdruckpfad 9 verbundene Bypassleitung an, die ein Rückschlagventil 5 aufnimmt, das weiter unten näher erläutert wird. Der Ventilschließkörper 1 des Rückschlagventils 5 ist in Sperrrichtung von einer Ventilfeder 4 beaufschlagt, so daß das Rückschlagventil 5 eine hydraulische Verbindung ausschließlich vom Saugpfad 6 zum Bremsdruckpfad 9 ermöglicht. Zwischen dem Anschluß des Rückschlagventils 5 an den Saugpfad 6 und der Pumpe 7 befindet sich im Nebenschluß ein Niederdruckspeicher 18. Der von den in der Grundstellung geschlossenen Auslaßventile 10 zur Pumpe 7 führende Hydraulikabschnitt wird im nachfolgenden mit dem Begriff Sekundärkreis beschrieben. Die Pumpe 7 ist sowohl mit einem schematisch skizzierten Saug- als auch Druckventil versehen und steht über eine nachgeschaltete Geräuschdämpfungseinrichtung mit dem Bremsdruckpfad 9 in Verbindung. Konstruktive Einzelheiten des im Hydraulikschaltplan symbolisch dargestellten Rückschlagventils 5 gehen aus den Fig. 2 und 3 hervor.

Demnach ist das Rückschlagventil 5 in einer Sacklochbohrung 13 eines Aufnahmekörpers 14 angeordnet, der sowohl in Patronenbauweise als auch als separat in einem Ventilblock befestigtes Einsatzteil ausgeführt sein kann. Es könnte aber auch unmittelbar im Aufnahmekörper eines der Auslaßventile 10 eingesetzt werden. Das Rückschlagventil 5 weist zwischen einem vorzugsweise metallischen Ventilschließkörper 1 und einem metallischen Ventilsitzkörper 2 einen elastomeren Dichtkörper 3 auf, der den Ventilschließkörper 1 kappenförmig umgreift und als eigentliches Dichtelement einen umlaufenden Wulst oder eine Lippe 20 aufweist. Unter Wirkung der Feder 4 liegt der topfförmige, elastomere Dichtkörper 3 mit seinem Wulst 20 an einer scheibenförmigen Dichtfläche des Ventilsitzkörpers 2 an, der in der Sacklochbohrung 13 des Aufnahmekörpers 14 mittels einer Verstemmung befestigt ist. Infolgedessen ist der der mittels elektrisch und hydraulisch schaltbare Ventile abgetrennte Sekundärkreis als isolierter Bereich im Hydrauliksystem anzusehen.

Am Ventilschließkörper 1 erstrecken sich in axialer Richtung zwei parallel zu einander verlaufende blattartige Halter 21, 21', an deren vom Ventilschließkörper 1 abgewandten Enden zwei Riegel 22, 22' nach außen abstehen. Die beiden Halter 21, 21' sind voneinander beabstandet, so daß sie beide federnd nach innen zur Achse hin verschwenkt werden können.

Der Ventildurchgang 25 im Ventilsitzkörper 2 weist an seinem dem Ventilschließkörper 1 abgewandten Ende eine ringförmige Erweiterung 27 auf, deren Durchmesser gegenüber dem Durchmesser des Ventildurchganges 25 vergrößert ist. Die innere Stufe der Erweiterung am Übergang zum Ventildurchgang bildet eine Vorraststufe 28. Die vom Ventilschließkörper abgewandte Fläche des Ventilsitzkörpers 2 bildet die eigentliche Raststufe 30.

Der Abstand der beiden Raststufen 28, 30 entspricht in etwa der möglichen Zusammendrückung des Dichtwulstes 20. Die Halter weisen eine solche Länge auf, daß die Riegel 22, 22' in der in der Figur 1 gezeigten Normalstellung des Ventils 3 hinter die Vorraststufe 28 greifen. Befinden sich die Riegel 22, 22' in einer solchen Position werden sie von den vorgespannten Haltern 21, 21' gegen die Wände der Erweiterung 27 gedrückt.

Die Ventilfeder 4 ist am Ventilschließkörper 1 befestigt, z.B. kann die obere Schleife der Feder in einer Nut am Ventilschließkörper 1 liegen. Somit bilden der Ventilsitzkörper 2, der Ventilschließkörper 1 und die Ventilfeder 4 eine Baueinheit, die als Ganzes in den Aufnahmekörper 14 eingesetzt werden kann.

Beim Evakuieren wird in der unteren Kammer 31, die unmittelbar mit dem Primärkreis verbunden ist, ein Unterdruck erzeugt, der bewirkt, daß der Ventilschließkörper 1 vom Ventilsitzkörper 2 abhebt, so daß auch in der oberen Kammer 32, die mit dem Sekundärkreis verbunden ist, ein Unterdruck entsteht. Damit der Ventilschließkörper 1 abheben kann, ist ein entsprechendes Spiel zwischen den Riegeln 21, 21' und der Vorraststufe 28 vorgesehen. Beim Befüllen legt sich der Dichtwulst 20 des Schließkörpers 1 wieder an den Ventilsitzkörper 2 an, so daß lediglich der Primärkreis gefüllt wird. Die Befüllung des Sekundärkreis erfolgt durch Öffnen eines der Auslaßventile 10, wie oben beschrieben.

Die Situation bei einem erstmaligen Druckaufbau im Bremskreis ist in der Figur 3 dargestellt. Unter dem Druck in der unteren Kammer 31 wird der Ventilschließkörper 1 gegen den Ventilsitzkörper 2 gedrückt, wobei der Wulst 20 zusammengedrückt wird und die Riegel 22, 22' über die Hauptraste 30 gehoben werden. Durch die Vorspannung der Halter 21, 21', werden die Riegel 22, 22' nach außen gedrückt und legen sich hinter die Hauptraste 30, wodurch der Ventilschließkörper 1 am Ventilsitzkörper 2 mit zusammengedrücktem Wulst 20 fixiert ist.

Damit ist das Rückschlagventil 5 dauerhaft geschlossen, wodurch sich die Kraftfahrzeugbremsanlage nun nicht mehr von einer Kraftfahrzeugbremsanlage ohne Rückschlagventil für die Befüllung unterscheidet. Mit der Verriegelung des Schließkörpers wird somit sicher verhindert, daß im Sekundärkreis bei einer Bremsbetätigung ein Unterdruck entsteht.

Da in der Vorraststellung der Ventilschließkörper 1 nahe dem Ventilsitzkörper 2 gehalten wird, kann in dieser Ausführungsform gegebenenfalls auf die Ventilfeder 4 verzichtet werden, so daß die erstmalige Befüllung des Sekundärkreises zusammen mit der Befüllung des Primärkreises erfolgen kann.

Das Rückschlagventil 5 kann auch unter Umgehung des Einlaßventils 11 unmittelbar parallel neben dem Auslaßventil 10 schaltungstechnisch angeordnet sein, ohne daß es hierzu einer weiteren Darstellung bedarf.

### Bezugszeichenliste

- 1: Ventilschließkörper
- 2: Ventilssitzkörper
- 3: Dichtkörper
- 4: Ventilfeder
- 5: Rückschlagventil
- 6: Saugpfad
- 7: Pumpe
- 8: Radbremsen
- 9: Bremsdruckpfad
- 10: Auslaßventile
- 11: Einlaßventile
- 12: Bremsdruckgeber
- 13: Sacklochbohrung
- 14: Aufnahmekörpers
- 18: Niederdruckspeicher
- 20: Wulst
- 21, 21': Halter
- 22, 22': Riegel
- 25: Ventildurchgang
- 27: Erweiterung
- 28: Vorraststufe
- 30: Hauptraststufe
- 31: Kammer
- 32: Kammer

## Patentansprüche

1. Rückschlagventil einer schlupfgeregelten hydraulischen Bremsanlage, mit einem Ventilsitzkörper (2) und einem elastisch nachgiebigen Ventilschließkörper (1), **dadurch gekennzeichnet, daß** eine zumindest im Normalbetrieb der Bremsanlage nicht lösbare Sperreinrichtung (22, 22'; 30) vorgesehen ist, die geeignet ist, im sperrenden Zustand den Ventilschließkörper (1) in der Schließstellung am Ventilsitzkörper (2) zu halten, in der der elastisch nachgiebige Ventilschließkörper (1) nahezu vollständig zusammengedrückt am Ventilsitzkörper (2) anliegt, wobei die Sperreinrichtung (22, 22', 30) reib- und/oder formschlüssig mit dem Ventilsitzkörper (2) zusammenwirkt.

2. Ventil nach Anspruch 1, **dadurch gekennzeichnet, daß** die Sperreinrichtung (22, 22'; 30) so ausgelegt ist, **daß** sie bei einer erstmaligen Druckbeaufschlagung des Ventilschließkörper (1) in Schließrichtung in den sperrenden Zustand gebracht wird.

3. Ventil nach Anspruch 1, **dadurch gekennzeichnet, daß** die Sperreinrichtung ein einseitig wirkendes Sperrgetriebe mit einem Riegel (22, 22') und einer Raste (30) ist.

4. Ventil nach Anspruch 3, **dadurch gekennzeichnet, daß** der Ventilschließkörper (1) mit einer elastisch nachgiebigen Dichtlippe (20) versehen ist, und **daß** der Riegel (22, 22') und die Raste (30) so aufeinander abgestimmt sind, **daß** der Riegel (22, 22') in die Raste (30) eingreift, sobald beim Verschieben des Ventilschließkörper (1) in Schließrichtung die Dichtlippe (20) nahezu vollständig zusammengedrückt sind.

5. Ventil nach Anspruch 4, **dadurch gekennzeichnet, daß** der Riegel (22, 22') am Ventilschließkörper (1) und die Raste (30) am Ventilsitzkörper (2) ausgebildet ist.

6. Ventil nach Anspruch 5, **dadurch gekennzeichnet, daß** der Riegel (22, 22') an einem freien Ende eines durch einen Ventildurchgang (25) im Ventilsitzkörper (2) geführten Halters (21, 21') angeordnet ist und **daß** die Raste (30) an der dem Ventilschließkörper (1) abgewandten Seite des Ventilsitzkörper (2) ausgebildet ist.

7. Ventil nach Anspruch 6, **dadurch gekennzeichnet, daß** am Ventilschließkörper (1) ein Absatz (28) vorgesehen ist, in den der Riegel (22, 22') eingreift, wobei bezogen auf die Grundstellung des Ventils zwischen Absatz (28) und Riegel (22, 22') ein Spiel besteht.

8. Ventil nach einem der vorhergehenden Ansprüche, **dadurch gekennzeichnet, daß** am Ventilschließkörper (1) mindestens zwei Riegel (22, 22') und zwei gegenüberstehende elastisch nachgiebige Halter (21, 21') vorgesehen sind, wobei ein Riegel (22, 22') jeweils an der Außenseite eines zugehörigen Halters (21, 21') angebracht ist, und **daß** die beiden Halter (21, 21') gegeneinander gebogen werden können.

9. Schlupfgeregelte hydraulische Bremsanlage aufweisend einen Primär- und einen Sekundärkreis , wobei die beiden Kreise über ein zum Primärkreis hin öffnendes Rückschlagventil (5) miteinander verbunden sind, **dadurch gekennzeichnet, daß** das Rückschlagventil (5) nach einem der Ansprüche 1 bis 8 ausgebildet ist.

## Claims

1. Non-return valve of a slip-controlled hydraulic brake system, with a valve seat member (2) and an elastically yielding valve closure member (1),
**characterized in that** there is provision of a blocking device (22, 22'; 30) which cannot be released, at least in the normal operation of the brake system, and which, in the blocking condition, is appropriate to keep the valve closure member (1) in the closing position on the valve seat member (2), in which the elastically yielding valve closure member (1) is almost completely compressed in abutment on the valve seat member (2), wherein the blocking device (22, 22', 30) cooperates with the valve seat member (2) in frictional and/or form-locking engagement therewith.

2. Valve as claimed in claim 1,
**characterized in that** the blocking device (22, 22'; 30) is so configured that it is caused to adopt the blocking condition when the valve closure member (1) is pressurized for the first time in the direction to close.

3. Valve as claimed in claim 1,
**characterized in that** the blocking device is a unilaterally acting ratchet locking mechanism with a lock bar (22, 22') and a catch (30).

4. Valve as claimed in claim 3,
**characterized in that** the valve closure member (1) includes a resiliently yielding sealing lip (20), and **in that** the lock bar (22, 22') and the catch (30) are so conformed to one another that the lock bar (22, 22') engages the catch (30) as soon as the sealing lip (20) has been compressed almost completely upon displacement of the valve closure member (1) in the closing direction.

5. Valve as claimed in claim 4,
**characterized in that** the lock bar (22, 22') is provided on the valve closure member (1) and the catch (30) is provided on the valve seat member (2).

6. Valve as claimed in claim 5,
**characterized in that** the lock bar (22, 22') is arranged on a free end of a holder (21, 21') which extends through a valve passage (25) in the valve seat member (2), and **in that** the catch (30) is provided on the side of the valve seat member (2) remote from the valve closure member (1).

7. Valve as claimed in claim 6,
**characterized in that** a step (28) is provided on the valve closure member (1) into which the lock bar (22, 22') is engaged, and there is a clearance between the step (28) and the lock bar (22, 22') in the initial position of the valve.

8. Valve as claimed in any one of the preceding claims,
**characterized in that** at least two lock bars (22, 22') and two opposed elastically yielding holders (21, 21') are provided on the valve closure member (1), and one lock bar (22, 22') is respectively fitted on the outside of an associated holder (21, 21'), and **in that** the two holders (21, 21') can be bent towards each other.

9. Slip-controlled hydraulic brake system, comprising a primary and a secondary circuit, wherein the two circuits are interconnected by way of a non-return valve (5) which opens towards the primary circuit,
**characterized in that** the non-return valve (5) is designed as claimed in any one of claims 1 to 8.

## Revendications

1. Valve antiretour d'un dispositif de freinage hydraulique à régulation du glissement, comprenant un corps de siège de valve (2) et un obturateur de valve (1) qui cède élastiquement, **caractérisée en ce qu'**il est prévu un dispositif de blocage (22, 22' ; 30) qui n'est pas libérable au moins dans le fonctionnement normal du dispositif de freinage et qui est adapté pour, dans l'état de blocage, maintenir l'obturateur de valve (1) dans la position de fermeture sur le corps de siège de valve (2), dans laquelle l'obturateur de valve (1) qui cède élastiquement est en appui sur le corps de siège de valve (2) en étant presque complètement comprimé, le dispositif de blocage (22, 22' ; 30) coopérant avec le corps de siège de valve (2) par effet de frottement et/ou par complémentarité de formes.

2. Valve suivant la revendication 1, **caractérisée en ce que** le dispositif de blocage (22, 22' ; 30) est agencé de façon à être amené dans l'état de blocage lorsqu'une pression est exercée pour la première fois sur l'obturateur de valve (1) dans le sens de fermeture.

3. Valve suivant la revendication 1, **caractérisée en ce que** le dispositif de blocage est un mécanisme de blocage à action dans un seul sens comprenant un élément de verrouillage (22, 22') et un élément d'arrêt (30).

4. Valve suivant la revendication 3, **caractérisée en ce que** l'obturateur de valve (1) est pourvu d'une lèvre d'étanchéité (20) qui cède élastiquement et **en ce que** l'élément de verrouillage (22, 22') et l'élément d'arrêt (30) sont adaptés l'un à l'autre de façon que l'élément de verrouillage (22, 22') vienne en prise sur l'élément d'arrêt (30) dès que, lors du déplacement de l'obturateur de valve (1) dans le sens de fermeture, la lèvre d'étanchéité (20) est presque complètement comprimée.

5. Valve suivant la revendication 4, **caractérisée en ce que** l'élément de verrouillage (22, 22') est réalisé sur l'obturateur de valve (1) et l'élément d'arrêt (30) sur le corps de siège de valve (2).

6. Valve suivant la revendication 5, **caractérisée en ce que** l'élément de verrouillage (22, 22') est disposé à une extrémité libre d'un élément de maintien (21, 21') guidé dans un passage de valve (25) ménagé dans le corps de siège de valve (2) et **en ce que** l'élément d'arrêt (30) est réalisé du côté du corps de siège de valve (2) qui est situé à l'opposé de l'obturateur de valve (1).

7. Valve suivant la revendication 6, **caractérisée en ce qu'**il est prévu, sur l'obturateur de valve (1), un décrochement (28) dans lequel l'organe de verrouillage (22, 22') vient en prise, un jeu existant, rapporté à la position de base de la valve, entre le décrochement (28) et l'élément de verrouillage (22, 22').

8. Valve suivant l'une des revendications précédentes, **caractérisée en ce que**, sur l'obturateur de valve (1), il est prévu au moins deux éléments de verrouillage (22, 22') et deux éléments de maintien (21, 21') qui se font face et qui cèdent élastiquement, chaque élément de verrouillage (22, 22') étant disposé du côté extérieur d'un élément de maintien (21, 21') associé respectif, et **en ce que** les deux éléments de maintien (21, 21') peuvent être pliés l'un vers l'autre.

9. Dispositif de freinage hydraulique à régulation du glissement comprenant un circuit principal et un circuit secondaire, les deux circuits communiquant l'un avec l'autre par l'intermédiaire d'une valve antiretour (5) s'ouvrant vers le circuit principal, **caractérisé en ce que** la valve antiretour (5) est agencée conformément à l'une des revendications 1 à 8.
